# EUROPÄISCHE PATENTSCHRIFT

(11) **EP 2 118 161 B1**
(45) Veröffentlichungstag und Bekanntmachung des Hinweises auf die Patenterteilung: **24.10.2012**
(21) Anmeldenummer: 07857162.7
(22) Anmeldetag: 29.12.2007
(51) Int. Cl.: C08G 18/08, C08G 18/12, C08G 18/32, C08G 18/40, C08G 18/42, C08G 18/48, C08G 18/66, C08G 18/72, C08G 18/76

(54) **POLYURETHAN-DISPERSIONEN AUF BASIS VON 2,2'-MDI**
POLYURETHANE DISPERSIONS BASED ON 2,2'-MDI
DISPERSIONS DE POLYURÉTHANE À BASE DE 2,2'-MDI

(30) Priorität: 12.01.2007 DE 102007001868
(43) Veröffentlichungstag der Anmeldung: 18.11.2009
(73) Patentinhaber: Bayer MaterialScience AG, 51368 Leverkusen (DE)
(72) Erfinder: GERTZMANN, Rolf, 51377 Leverkusen (DE); ROSCHU, Rolf, 47877 Willich (DE); MEIER-WESTHUES, Hans-Ulrich, 51379 Leverkusen (DE); IRLE, Christoph, 41539 Dormagen (DE)
(86) Internationale Anmeldenummer: PCT/EP2007/011471
(87) Internationale Veröffentlichungsnummer: WO 2008/083846

(56) Entgegenhaltungen:
- EP-A- 0 236 050
- US-A- 4 206 255

## Beschreibung

Die Erfindung betrifft wässrige Polyurethan-Dispersionen, die als Aufbaukomponente Diphenylmethan-2,2'-diisocyanat enthalten, ein Verfahren zu deren Herstellung und Verwendung als Beschichtungsmittel.

Polyurethane sind besonders hochwertige und sehr universelle Polymere, die besonders hohe Anforderungen an mechanische Belastbarkeit, wie z.B. geringer Abrieb erfüllen. Speziell im Bereich der Beschichtung mechanisch stark beanspruchter Flächen ist die Verwendung von Polyurethanen auf Basis aromatischer Polyisocyanate von Vorteil. Allerdings ist die Herstellung von wässrigen Polyurethan(PUR)-Dispersionen auf Grund der hohen Reaktivität der aromatisch gebundenen Isocyanatruppen gegenüber Wasser nur mit einem hohen apparativen Aufwand möglich. Wässrige PUR-Dispersionen, die als Aufbaukomponente aromatische Isocyanate enthalten, zeigen darüber hinaus nur eine begrenzte Lagerstabilität.

In der EP- 0 220 000 A2 werden stabile Dispersionen offenbart, die unter anteiliger Verwendung von 2,4'-Diphenylmethandiisocyanat zur Herstellung von Prepolymeren mit terminalen, aromatischen Isocyanaten hergestellt und anschließend dispergiert werden. Die aus diesen Dispersionen hergestellten Produkte weisen neben einer verbesserten Beständigkeit gegen Lösungsmittel und Wasser, auch verbesserte physikalische Eigenschaften gegenüber reinen Toluylendiisocyanaten auf. Allerdings zeigen die dort beschriebenen Dispersionen eine unzureichende Lagerstabilität, was sich in der Bildung von Koagulaten in der Dispersion zeigt.

EP 0 373 671 A2 beschreibt wässrige Polyurethandispersionen, die aus Isocyanatgemischen aufgebaut sind. Als Isocyanatmischung kommen solche in Frage, die vollständig aus aromatischen Polyisocyanaten oder aus einem aromatischen Polyisocyanat und mindestens einem aliphatischen Polyisocyanat bestehen. Als aromatisches Diisocyanat wird unter anderen Diphenylmethan-4,4'-diisocyanat genannt. Die dort offenbarten Produkte weisen eine hohe Teilchengröße auf, was zu einer unerwünschten Koagulatbildung und damit zu einer unzureichenden Lagerstabiltät führt.

Nach wie vor besteht Bedarf an wässrigen Polyurethan-Dispersionen, die Beschichtungen mit ausreichender Elastizität und gleichzeitig gutem Abreibverhalten ergeben. Solche Dispersionen sollten sich insbesondere lagerstabil, also ohne Bildung von Koagulaten sein.

Die zuvor genannte Aufgabe wurde erfindungsgemäß durch eine wässrige Polyurethan (PUR)-Dispersion, enthaltend ein Gemisch A) zweier oder mehrerer Polyisocyanate An + 1) als Aufbaukomponenten, von denen ein Polyisocyanat A1) Diphenyl-2,2'-diisocyanat ist, mit der Maßgabe, dass in diesem Gemisch 25 bis 80 Gew.-% Diphenyl-2,2'-diisocyanat A1) vorhanden ist, gelöst.

Die erfindungsgemäßen wässrigen Polyurethan-Dispersionen enthalten neben der Aufbaukomponente A) als weitere Aufbaukomponenten:
B) ein oder mehrere Polyol/-e mit zahlenmittleren Molgewichten von 500 bis 6000 g/mol,
C) ein oder mehrere isocyanatreaktive, ionisch oder potentiell ionische Verbindung/-en sowie
D) eine oder mehrere niedermolekulare Verbindung/-en des Molgewichts 62 bis 499 g/mol, die in Summe über zwei oder mehr Hydroxyl- und/oder Aminogruppen verfügen.

Bevorzugt enthalten die erfindungsgemäßen wässrigen Polyurethan-Dispersionen neben der Aufbaukomponente A) als weitere Aufbaukomponenten:
B) ein oder mehrere Polyol/-e mit zahlenmittleren Molgewichten von 500 bis 6000 g/mol,
C) ein oder mehrere isocyanatreaktive, ionisch oder potentiell ionische Verbindung/-en sowie
D) eine oder mehrere niedermolekulare Verbindung/-en des Molgewichts 62 bis 499 g/mol, die in Summe über zwei oder mehr Hydroxyl- und/oder Aminogruppen verfügen und
F) hydrophile Emulgatoren.

Gegebenenfalls können die erfindungsgemäßen Polyurethan-Dispersionen Monoalkohole und/oder Monoamine E) enthalten.

Die erfindungsgemäße Polyurethan-Dispersion enthält als Aufbaukomponenten 5 bis 60 Gew.-%, bevorzugt 15 bis 57 Gew.-% und besonders bevorzugt 25 bis 55 Gew.-% an Komponenten An+1), 15 bis 70 Gew.-%, bevorzugt 20 bis 65 Gew.-% und besonders bevorzugt 25 bis 60 Gew.-% an Komponente B), 0,5 bis 15 Gew.-%, bevorzugt 2 bis 14 Gew.-% und besonders bevorzugt 3 bis 12 Gew.-% an Komponente C), 0,5 bis 20 Gew.-%, bevorzugt 2 bis 18 Gew.-% und besonders bevorzugt 4 bis 15 Gew.-% an Komponente D) sowie 0 bis 5 Gew.-%, bevorzugt 0 bis 4 Gew.-% und besonders bevorzugt 0 bis 2 Gew.-% an Komponente E) und 0 bis 8 Gew.-%, besonders bevorzugt 0 bis 6 Gew.-% und besonders bevorzugt 0 bis 5 Gew.-% an Komponente F), wobei sich die Prozentangaben auf das Gewicht des Harzfestkörpers beziehen und zu 100 Gew.-% addieren.

Bevorzugt enthält die erfindungsgemäße Polyurethan-Dispersion als Aufbaukomponenten 5 bis 60 Gew.-%, bevorzugt 15 bis 57 Gew.-% und besonders bevorzugt 25 bis 55 Gew.-% an Komponenten An+1), 15 bis 70 Gew.-%, bevorzugt 20 bis 65 Gew.-% und besonders bevorzugt 25 bis 60 Gew.-% an Komponente B), 0,5 bis 15 Gew.-%, bevorzugt 2 bis 14 Gew.-% und besonders bevorzugt 3 bis 12 Gew.-% an Komponente C), 0,5 bis 20 Gew.-%, bevorzugt 2 bis 18 Gew.-% und besonders bevorzugt 4 bis 15 Gew.-% an Komponente D) sowie 0 bis 5 Gew.-%, bevorzugt 0 bis 4 Gew.-% und besonders bevorzugt 0 bis 2 Gew.-% an Komponente E) und 0,1 bis 8 Gew.-%, besonders bevorzugt 0,5 bis 6 Gew.-% und besonders bevorzugt 1,0 bis 5 Gew.-% an Komponente F), wobei sich die Prozentangaben auf das Gewicht des Harzfestkörpers beziehen und zu 100 Gew.-% addieren.

Als Komponenten An+1) sind, neben Diphenylmethan-2,2'-düsocyanat A1), die üblicherweise in der Polyurethanchemie eingesetzten Polyisocyanate geeignet. Bevorzugt sind Diisocyanate der Formel R¹(NCO)₂, wobei R¹ für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, 1-Isocyanato-3,3,5-trimethyl-5-isocyanatomethylcyclohexan (Isophorondiisocyanat), 4,4'-Diisocyanato-dicyclohexylmethan, 1,3-Phenylendiisocyanat, 3,3'-Dimethyl-4,4'biphenylendiisocyanat, 3,3'-Dichloro-4,4'biphenylendiisocyanat, 3,3'-Dimethoxy-4,4'biphenylendiisocyanat, 1,5-Naphthylendiisocyanat, 4,4'-Diisocyanatodiphenylmethan, 2,4'-Diisocyanatodiphenylmethan, 2,4-Diisocyanatotoluol, 2,6-Diisocyanatotoluol oder α,α,α,'α',-Tetra-methyl-*m*- oder *p*-xylylendiisocyanat sowie Mischungen der genannten Diisocyanate. Bevorzugte Polyisocyanate An+1), die zusammen mit Diphenylmethan-2,2'-diisocyanat A1) eingesetzt werden, sind entweder (4,4'-Diisocyanatodiphenylmethan und/oder 2,4'-Diisocyanatodiphenylmethan und/oder 2,4-Diisocyanatotoluol und/oder 2,6-Diisocyanatotoluol) sowie (4,4'-Diisocyanatodiphenylmethan und/oder 2,4'-Diisocyanatodiphenylmethan und 2,4-Diisocyanatotoluol und/oder 2,6-Diisocyanatotoluol). Besonders bevorzugt werden in Verbindung mit 2,2'-Diisocyanatodiphenylmethan als Komponente A1) Mischungen der Isomeren (4,4'-Diisocyanatodiphenylmethan oder 2,4'-Diisocyanatodiphenylmethan) und (2,4-Diisocyanatotoluol und/oder 2,6-Diisocyanatotoluol) als Komponenten An+1) eingesetzt. Ganz besonders bevorzugt ist eine Mischung aus 2,2'-Diisocyanatodiphenylmethan und 2,4'-Diisocyanatodiphenylmethan und 2,4-Diisocyanatotoluol.

Es ist ebenfalls möglich z.B. drei- und/oder höherwertige Isocyanate An+1) einzusetzen, um somit einen gewissen Verzweigungs- oder Vernetzungsgrad des Polyurethans zu gewährleisten. Derartige Isocyanate werden z.B. erhalten, indem zweiwertige Isocyanate in der Weise miteinander umgesetzt werden, dass ein Teil der Isocyanatgruppen zu Isocyanurat-, Biuret-, Allophanat-, Uretdion- oder Carbodiimidgruppen derivatisiert werden. Auch solche über nichtionische Gruppen hydrophilierte Polyisocyante, wie sie üblicherweise als Vernetzer in wässrigen 2K-PUR-Lacken eingesetzt werden, sind geeignet. Derartige Polyisocyanate können hohe Funktionalitäten, z.B. von mehr als 3 aufweisen. Als höherwertige Isocyante können anteilig auch höhere Homologe des Diisocyanatodiphenylmethans, wie sie in an sich bekannter Weise durch Phosgenierung von Anilin/Formaldehyd-Kondensaten erhalten werden, verwendet werden.

Auch solche über ionische Gruppen hydrophilierte Polyisocyanate, wie sie üblicherweise als Vernetzer in wässrigen 2K-PUR-Lacken eingesetzt werden, sind als An+1) geeignet. Derartige Polyisocyanate können hohe Funktionalitäten, z.B. von mehr als 3, aufweisen. Hydrophilierte Polyisocyanate sind z.B. durch Modifikation mit Carboxylat-, Sulfonat- und/oder Polyethylenoxidgruppen und/oder Polyethylenoxid/Polypropylenoxidgruppen erhältlich. Zur Hydrophilierung der Polyisocyanate ist es möglich die Polyisocyanate mit z.B. durch Umsetzung mit unterschüssigen Mengen an einwertigen, hydrophilen Polyetheralkoholen umzusetzen. Die Herstellung derartiger hydrophilierter Polyisocyanate ist beispielsweise in der EP-A 0 540 985 beschrieben. Gut geeignet sind auch die in der EP-A 959087 beschriebenen. Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 beschriebenen wasserdispergierbaren Polyisocyanatgemische auf Basis von Trüsocyanatononan sind geeignet. Ebenso möglich ist die Hydrophilierung durch Zusatz handelsüblicher Emulgatoren.

Geeignete polymere Polyole B) im Molekulargewichtsbereich von 500 bis 6000 g/mol, bevorzugt von 500 bis 3000 g/mol und besonders bevorzugt von 650 bis 2500 g/mol sind die zur Herstellung von Polyurethanen eingesetzten polymeren Polyole. Sie weisen eine OH-Funktionalität von mindestens 1,8 bis 5, bevorzugt von 1,9 bis 3 und besonders bevorzugt von 1,9 bis 2,0 auf.

Geeignete polymere Polyole B) sind zum Beispiel Polyester, Polyether, Polycarbonate, Polyestercarbonate, Polyacetale, Polyolefine, Polyacrylate und Polysiloxane. Bevorzugt sind bifunktionelle Polyester, Polyether, Polyestercarbonate und Polycarbonate. Mischungen der beschriebenen polymeren Polyole B) sind ebenfalls geeignet. Als Komponente B) kommen auch Blockcopolymere aus Ethylenoxid und Propylenoxidgruppen in Frage. Solche Blockcopolymere bestehen bis zu 50% aus Ethylenoxidgruppen und werden in einer Menge von 10 bis 5 Gew.-%, bevorzugt von 8 bis 5 Gew.-% und besonders bevorzugt von 7 bis 5 Gew.-%, gemessen an der Gesamtmenge des Polyurethanharzes, mit verwendet.

Geeignete ionisch oder potentiell ionisch hydrophilierende Verbindungen entsprechend der Definition der Komponente C) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2-oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von aliphatischen Diaminen wie z.B. Ethylendiamin (EDA) oder Isophorondiamin IPDA und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyldiethanolamin als hydrophile Aufbaukomponenten enthalten. Weiterhin kann Cyclohexylaminopropansulfonsäure (CAPS) wie z.B. in der WO-A 01/88006 als Verbindung entsprechend der Definition der Komponente C) verwendet werden.

Bevorzugte Komponenten C) sind potentiell ionische Gruppen tragende Verbindungen wie N-Methyl-diethanolamin, Hydroxypivalinsäure und/oder Dimethylolpropionsäure und/oder Dimethylolbuttersäure. Besonders bevorzugte Verbindungen C) sind potentiell anionische Gruppen tragende, OH-funktionelle Verbindungen wie Hydroxypivalinsäure und/oder Dimethylolpropionsäure und/oder Dimethylolbuttersäure.

Ebenfalls geeignet als Komponente C) sind aminofunktionelle Verbindungen C2) wie Diaminocarbonsäuren oder Diaminosulfonsäuren und deren Salze, wie z.B. Ethylendiamin-β-ethyl - oderpropylsulfonsäure, 1,2- oder 1,3 Propylendiamin-β-ethylsulfonsäure oder Umsetzungsprodukte von (Meth-)acryisäure und primären Polyaminen (siehe z.B. DE-A-19 750 186, S. 2, Z. 52 - 57) oder Ethylendiamin-β-ethylcarboxylat.

Als Komponente D) kommen insbesondere Polyole D1) mit 2 bis 4 OH Gruppen pro Molekül sowie Amine und Aminopolyole D2) mit 2 bis 4 primären und/oder sekundären Aminogruppen in Frage.

Als Komponenten D1) finden z.B. Ethandiol, 1,2- und 1,3-Propandiol, 1,2-, 1,3- und 1,4-Butandiol, 1,5-Pentandiol, 1,6-Hexandiol, 1,2-Cyclohexandiol, 1,4-Cyclohexandiol, Cyclohexan-1,4-dimethanol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole, Trimethylolethan, Trimethylolpropan, Glycerin, Pentaerythrit und N- Alkanolamide, wie zum Beispiel Fettsäurediethanolamide als Umsetzungsprodukt aus Diethanolamin und C₆-C₂₄-gesättigten und/oder ungesättigten Fettsäuren. Bevorzugt Fettsäuren sind Mischungen, die aus Fetten und Ölen wie z.B. Kokosöl, Sojabohnenöl, Sonnenblumenöl, Leinöl, Erdnussöl, Palmöl, Palmkernöl, Rüböl sowie Kokosöl Verwendung und als Komponente D2) Hydrazin, Ethylendiamin, 1,4-Diaminobutan, Isophorondiamin, 4,4-Diaminodicyclohexylmethan, Ethanolamin oder Diethanolamin Verwendung. Bevorzugte Komponenten D1) sind 1,3-Propandiol, 1,4-Butandiol, 1,5-Pentandiol, 1,6-Hexandiol, 1,4-Cyclohexandiol, Cyclohexan-1,4-dimethanol, 2-Ethyl-2-butylpropandiol, Diethylenglykol, Triethylenglykol, Tetraethylenglykol, Dipropylenglykol, Tripropylenglykol. Bevorzugte Komponenten D2) sind Hydrazin, Ethylendiamin, 1,4-Diaminobutan, Isophorondiamin oder 4,4-Diaminodicyclohexylmethan. Besonders bevorzugte Komponente D2) ist Hydrazin.

Neben dem Einsatz gegenüber Isocyanaten reaktiver, polyfunktioneller Verbindungen kommt auch die teilweise Terminierung des Polyurethan-Präpolymers mit monofunktionellen Alkoholen oder Aminen E) in Betracht. Geeignete Verbindungen E) sind aliphatische Monoalkohole E1) oder Monoamine E2) mit 1 bis 18 C-Atomen. Bevorzugt sind Ethanol, n-Butanol, Ethylenglykol-monobutylether, 2-Ethylhexanol, 1-Octanol, 1-Dodecanol, 1-Hexadecanol oder Di-N-alkylamine. Besonders bevorzugt sind Ethanol, n-Butanol, Ethylenglykol-monobutylether oder 2-Ethylhexanol.

Geeignet als Komponente E1) sind ebenfalls mono-hydroxyfunktionelle Ester der Acryl- und/oder Methacrylsäure. Beispiele für solche Verbindungen sind die Mono-(Meth-)acrylate zweiwertiger Alkohole wie z.B. Ethandiol, die isomeren Propandiole und Butandiole oder (Meth-)acrylate mehrwertiger Alkohole wie z.B. Trimethylolpropan, Glycerin und Pentaerythrit, die im Mittel eine freie Hydroxygruppe enthalten. Dispersionen, die ungesättigte (Meth-)acrylate enthalten, eignen sich für eine Vernetzung durch energiereiche Strahlung, bevorzugt durch UV-Strahlung oder chemisch induzierte radikalische Polymerisation durch Peroxide oder Azoverbindungen, gegebenenfalls in Gegenwart weiterer polymerisierbarer (Meth-)Acrylatmonomere.

Des Weiteren enthalten die erfindungsgemäßen Polyurethan-Dispersionen bevorzugt Emulgatoren F) zu denen beispielsweise nichtionisch hydrophile Verbindungen, die pro Molekül eine gegenüber Isocyanaten reaktive Gruppe enthalten, zählen. Solche Moleküle sind z.B. Polyoxyalkylenether, die beispielsweise aus einem Monoalkohol oder Phenole als Startermolekül und aus Polyethylenoxid- und gegebenenfalls Polypropylenpolyethylenoxidblöcken mit einem zahlenmittleren Molgewicht von 250 bis etwa 3000 aufgebaut sind. Bei ausreichendem Anteil dieser nichtionisch hydrophilen Verbindungen ist es auch möglich, auf die Verwendung ionisch hydrophiler Verbindungen gemäß (D) zu verzichten.

Bevorzugte Emulgatoren F) sind anionische Komponenten, die Sulfat-, Sulfonat, Phosphat- oder Carboxylatgruppen aufweisen und keine gegenüber NCO-Gruppen reaktiven Zentren tragen. Hierzu gehören z.B. Alkylsulfate mit Alkylketten von C8 bis C18, Ethersulfate mit einem Nonylphenolrest, Phosphatester eines ethoxylierten C8- bis C18-Alkohols, C8- bis C18-alkylsubsituierte Benzylsulfonate oder Sulfosuccinate.

Gegenstand der vorliegenden Erfindung ist weiterhin ein Verfahren zur Herstellung der erfindungsgemäßen wässrigen Polyurethandispersionen, dadurch gekennzeichnet, dass die Komponenten B), C) sowie D) getrennt und in beliebiger Reihenfolge oder als Mischung mit den vorgelegten Komponenten A1) und An+1) zu einem isocyanatfunktionellen Prepolymeren umgesetzt werden, anschließend das mit Neutralisationsamin versetzte Wasser zum Prepolymer oder das Prepolymer zu der wässrigen Vorlage gegeben und das Prepolymer in die wässriger Phase überführt wird.

Idealerweise werden NH-Gruppen funktionelle Komponenten D2) und/oder E2) nur dann zugesetzt, wenn die Reaktivität gegenüber Isocyanten moderat ist und es somit nicht zum Vergelen des Ansatzes führt. Eine kontrollierte Reaktion zwischen Isocyanaten und Aminen wird dann erzielt, wenn in der dem Fachmann bekannten Weise die Reaktion in einer ausreichenden Lösungsmittelmenge - wie z.B. beim Acetonprozess - durchgeführt wird oder aber nach dem Dispergierschritt in disperser Phase.

Zur Herstellung des isocyanatgruppenhaltigen Prepolymers wird bevorzugt die Komponente A) (A1) und An+1)) vorgelegt und die OH-funktionellen Komponenten einzeln oder als Mischung portionsweise oder ohne Unterbrechung addiert. Gegebenenfalls wird ein Lösemittel bzw. ein Lösemittelgemisch eingesetzt, um die Viskosität der Harzmischung zu reduzieren und/oder die Reaktivität einzelner, gegenüber Isocyanaten reaktiver Verbindungen abzudämpfen. Je nach Wahl des Lösungsmittels kann dieses später nach dem Dispergierschritt wieder abdestilliert werden.

Als Lösemittel geeignet sind die an sich bekannten üblichen Lacklösemittel, wie z.B. Aceton, 2-Butanon, 4-Methyl-2-pentanon, Cyclohexanon, Toluol, Xylol, Testbenzin, Mischungen, die vor allem höher substituierte Aromaten enthalten, wie sie beispielsweise unter den Bezeichnungen Solvent Naphtha, Solvesso^{®} (Deutsche Exxon, Köln, DE), Cypar^{®} (Shell, Eschborn, DE), Cyclo Sol^{®} (Shell, Eschborn, DE), Tolu Sol^{®} (Shell, Eschborn, DE), Shellsol^{®} (Shell, Eschborn, DE) im Handel sind, Kohlensäureester, wie Dimethylcarbonat, Diethylcarbonat, 1,2-Ethylencarbonat und 1,2-Propylencarbonat, N-Methylvalerolactam und N-Methylcaprolactam, aber auch Lösemittel wie Diethylenglykoldimethylether, Diethylenglykolethyl- und -butyletheracetat und Dipropylenglykoldimethylether oder beliebige Gemische solcher Lösemittel. Bevorzugte Lösungsmittel sind N-Methylpyrrolidon, N-Ethylpyrrolidon, Dipropylenglykoldimethylether, Aceton und Methylethylketon. Besonders bevorzugt ist Aceton als Lösungsmittel, das nach dem Dispergierschritt destillativ abgetrennt werden kann.

In einem weiteren Schritt werden die zur Neutralisation befähigten Gruppen in die Salzform überführt. Durch Zugabe von Wasser zum Polymerharz oder durch Zugabe des Polymerharzes zum Wasser wird in der dem Fachmann bekannten Weise jeweils unter Eintrag ausreichender Scherenergie eine Dispersion erzeugt. Es ist prinzipiell aber auch möglich hydrophile Komponenten C), wie z.B. die Komponenten C2) - Ethylendiamin-β-ethyl - oder- propylsulfonat, 1,2- oder 1,3 Propylendiamin-β-ethylsulfonat - einzusetzen, die bereits bei der Zugabe zum Polyurethanprepolymer in Salzform vorliegen, wie sie z.B. bei der Herstellung von Polyurethandispersionen nach dem Acetonprozess eingesetzt werden.

Geeignete Neutralisationsmittel sind alkalische organische und/oder alkalische anorganische Verbindungen. Bevorzugt sind neben wässriger Ammoniak-, Ethylamin- und Dimethylaminlösung, flüchtige primäre, sekundäre und tertiäre Amine, wie z.B. Triethylamin, N-Methylmorpholin, N-Ethylmorpholin, N-Methylpiperidin, Triethanolamin, Ethyldiisopropylamin und Isopropyldimethylamin oder Gemische dieser Verbindungen. Bevorzugt sind gegenüber Isocyanaten unreaktive tertiäre Amine wie z.B. Triethylamin, Ethyldiisopropylamin, N-Methylmorpholin und N-Ethylmorpholin. Gemische aus Neutralisationsaminen sind ebenfalls geeignet.

Die Neutralisation des Polyurethanprepolymers mit potentiell ionischen Gruppen erfolgt bevorzugt aber erst in der Wasserphase. Dabei wird dem zur Dispergierung verwendeten Wasser eine mit der im Prepolymer eingebauten Komponente (D) zur Salzbildung befähigte Komponente in ausreichender Menge zugesetzt. Je nach Neutralisationsgrad kann die Dispersion sehr feinteilig eingestellt werden, so dass sie praktisch das Aussehen einer Lösung hat, aber auch sehr grobteilige Einstellungen sind möglich, die ebenfalls ausreichend stabil sind. Auch der Feststoffgehalt kann von z.B. 20 bis 65 Gew.-% variiert werden. Ein bevorzugter Feststoffbereich erstreckt sich von 25 bis 50 Gew.-%. Besonders bevorzugt ist ein Feststoffgehalt von 30 bis 40 Gew.-%.

Überschüssige Isocyanatgruppen werden anschließend durch Umsetzung mit isocyanatreaktiven Verbindungen D2) und/oder E2) zur Reaktion gebracht (Kettenverlängerung, Kettenabbruch). Hierzu werden bevorzugt primäre oder sekundäre Mono-, Di- sowie Triamine und Hydrazin eingesetzt, die besonders bevorzugt bereits dem Dispergierwasser zugesetzt sind.

Die Menge der stickstoffhaltigen, isocyantreaktiven Komponente(-n) D2) und/oder E2), wird so bemessen, dass 30 bis 105 %, bevorzugt 40 bis 90 % der Isocyanatgruppen abreagieren können. Besonders bevorzugt werden 30 bis 50% der Isocyanatgruppen mit Hydrazin D2) umgesetzt. Verbleibende Isocyanatgruppen reagieren mit dem anwesenden Wasser.

Zur Herstellung von Beschichtungsmitteln werden die erfindungsgemäßen Polyurethan-Dispersionen entweder allein oder in Kombination mit anderen wässrigen Bindemitteln eingesetzt. Solche wässrigen Bindemittel können z.B. aus Polyester-, Polyacrylat, Polyepoxid- oder Polyurethanpolymeren aufgebaut sein. Auch die Kombination mit strahlenhärtbaren wässrigen Bindemitteln ist möglich. Weiterhin ist es möglich, polymerisierbare, vinylisch ungesättigte Monomere in Gegenwart der erfindungsgemäßen Polyurethan-Dispersionen zu polymerisieren, um zu Hybriddispersionen zu gelangen. Hierzu wird in Gegenwart der Polyurethandispersion eine der Emulsionspolymerisation von olefinisch ungesättigten Monomeren wie Estern und/oder Amiden aus (Meth-)acrylsäure und Alkoholen mit 1 bis 18 C-Atomen, Styrol, Vinylestern oder Butadien durchgeführt. Die Monomere können funktionelle Gruppen wie Hydroxyl- oder Acetoacetoxygruppen sowie eine oder mehrere olefinische Doppelbindungen enthalten.

Gegenstand der vorliegenden Erfindung sind somit physikalisch trocknende Beschichtungsmittel, enthaltend die erfindungsgemäßen Polyurethandispersionen.

Weiterhin ist es möglich vor der Applikation des Beschichtungsmittels, enthaltend die erfindungsgemäße Polyurethandispersion, Vernetzer zuzusetzen. Hierfür geeignet sind bevorzugt hydrophile und hydrophobe Polyisocyanatvernetzer mit freien NCO Gruppen. Gegenstand der vorliegenden Erfindung sind somit auch wässrige Zweikomponenten(2K)-Beschichtungsmittel enthaltend Polyurethandispersionen gemäß Anspruch 1 und einen Vernetzer.

Die erfindungsgemäßen Polyurethan-Dispersionen werden bevorzugt als Bindemittel in Beschichtungsmittel verwendet. Beschichtungen auf Basis der erfindungsgemäßen Polyurethan-Dispersionen können auf beliebige Substrate aufgebracht werden, z. B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Beschichtung von Holz- und Kunststoffböden sowie mineralischen Böden.

Gegenstand der vorliegenden Erfindung ist auch die Verwendung der erfindungsgemäßen Polyurethandispersionen zur Herstellung von Klarlacken, pigmentierten oder nicht pigmentierten Beschichtungen. Geeignete Substrate sind mineralische bzw. keramisch Untergründe und Materialien, Beton, Hartfaserwerkstoffe, metallische Untergründe, Kunststoffe, Papier, Pappe, Verbundwerkstoffe, Glas, Porzellan, Textil und/oder Leder. Bevorzugte Substrate sind hölzerne und holzartige Substrate wie z.B. Möbel, Holzfaserplatten, Parkett, Fensterrahmen, Türen, Paneelen, Bretter oder Balken.

Die erfindungsgemäßen Polyurethan-Dispersionen können als solche oder in Kombination mit den aus der Lacktechnologie bekannten Hilfs- und Zusatzmitteln wie z.B. Füllstoffen, Pigmenten, Lösungsmitteln, Verlaufshilfsmitteln zur Herstellung von Beschichtungen verwendet werden.

Der Auftrag der Beschichtungsmittel enthaltend die erfindungsgemäße Polyurethandispersion kann auf bekannte Weisen, z. B. durch Streichen, Gießen, Rakeln, Spritzen, Sprühen, Schleudern, Walzen oder Tauchen erfolgen. Die Trocknung des Lackfilms kann bei Raumtemperatur oder erhöhter Temperatur, aber auch durch Einbrennen bei bis zu 200 °C erfolgen.

### Beispiele

**Tabelle 1: Eingesetzte Komponenten**

| **Handelsname** | **Funktion** | **Bezeichnung** | **Hersteller** |
|---|---|---|---|
| Pluronic^{®} PE 4300 | | Polyethylenglykol-block-polypropylenglykol-block-polyethylenglykol, F* = 2, MG ≈ 1600 g/mol, 30 Gew.-% Ethylenglykolanteil | BASF AG, Ludwigshafen, DE |
| Simulsol^{®} P 23 | Emulgator | Polyethoxylierter Laurylalkohol (23 Ethylenoxideinheiten), HLB Wert = 16,9 | Seppic S.A., Paris, F |
| Terathane^{®} 2000 | | Poly(tetramethylenoxide, MG 2000 (Funktionalität = 2), | DuPont, Bad Homburg, DE |

| | | | |
|---|---|---|---|
| F* = Funktionalität gegenüber Isocyanaten | | | |

### PUR-Dispersion 1

Eine Mischung aus 108,4 g Toluylen-2,4-diisocyanat, 77,9 g 2,2'-Diisocyanatodiphenylmethan und 77,9 g 2,4'-Diisocyanatodiphenylmethan wurde innerhalb von 2 Minuten einer Mischung aus 33,9 g Dimethylolpropionsäure, 310,3 g eines Polyesters aus Adipinsäure und 1,6-Haxandiol (OHZ- 47 mg KOH/g) und 69,6 g 1,6 Hexandiol in 173 g Aceton zugesetzt. Durch externe Kühlung der Reaktionsmischung wurde die Temperatur zunächst bei ca. 56°C gehalten. Nach dem Abklingen der Exothermie wurde bei 60°C bis zum Erreichen des theoretischen NCO-Gehalts (2,4 %) gerührt. Dann wurde 3,5 g Simulsol P 23 zugegeben und vollständig in die Reaktionsmischung eingerührt. 800 g des auf 25°C abgekühlten Prepolymers wurden unter kräftigem Rühren einer bei 15°C vorgelegten Lösung aus 1314 g Wasser, 28,9 g Triethylamin und 3,5 g Hydazinhydrat (64 %- ige Lösung) zugeführt. Die entstandene feinteilige Dispersion wurde anschließend für 20 Minuten bei 40°C nachgerührt, bevor das Aceton destillativ aus der Dispersion entfernt wurde. Nach Abkühlen der Dispersion auf Raumtemperatur wurde durch ein Schnellfilter (240 µm) filtriert. Die Dispersion war auch nach 6 Monaten Lagerung bei 20°C noch stabil; es konnte kein Bodensatz beobachtet werden.

### Kenndaten der Polyurethan-Dispersion:

| | |
|---|---|
| Mittlere Teilchengröße: | 106 nm |
| (Laserkorrelationsspektroskopie, LKS) | |
| pH (20°C): | 8,6 |
| Festgehalt: | 34 % |

### PUR-Dispersion 2

Eine Mischung aus 81,3 g Toluylen-2,4-diisocyanat, 81,8 g 2,2'-Diisocyanatodiphenylmethan und 35,1 g 2,4'-DÜsocyanatodiphenylmethan wurde innerhalb von 2 Minuten einer Mischung aus 25,4 g Dimethylolpropionsäure, 232,7 g eines Polyesters aus Adipinsäure und 1,6-Haxandiol (OHZ- 47 mg KOH/g), 22,5 g Pluronic^{®} PE 4300 und 52,2 g 1,6 Hexandiol in 129,5 g Aceton zugesetzt. Durch externe Kühlung der Reaktionsmischung wurde die Temperatur zunächst bei ca. 56°C gehalten. Nach dem Abklingen der Exothermie wurde bei 60°C bis zum Erreichen eines NCO-Gehalts von 2,2 Gew.-% (theo. NCO-Gehalt 2,4 %) gerührt. Dann wurden 2,7 g Simulsol^{®} P 23 zugegeben und vollständig in die Reaktionsmischung eingerührt. 500 g des auf 25°C abgekühlten Prepolymers wurden unter kräftigem Rühren einer bei 15°C vorgelegten Lösung aus 821 g Wasser, 18,1 g Triethylamin und 2,2 g Hydazinhydrat (64 %-ige Lösung) zugeführt. Die entstandene Dispersion wurde anschließend für 20 Minuten bei 40°C nachgerührt, bevor das Aceton destillativ aus der Dispersion entfernt wurde. Nach Abkühlen der Dispersion auf Raumtemperatur wurde durch ein Schnellfilter (240 µm) filtriert. Die Dispersion war auch nach 4 Monaten Lagerung bei 20°C noch stabil; es konnte kein Bodensatz beobachtet werden.

### Kenndaten der Polyurethan-Dispersion:

| | |
|---|---|
| Mittlere Teilchengröße: (Laserkorrelationsspektroskopie, LKS) | 275 nm |
| pH (20°C): | 8,9 |
| Festgehalt: | 35 % |

### PUR-Dispersion 3

Eine Mischung aus 81,3 g Toluylen-2,4-diisocyanat, 35,1 g 2,2'-DÜsocyanatodiphenylmethan und 81,8 g 2,4'-Diisocyanatodiphenylmethan wurde innerhalb von 2 Minuten einer Mischung aus 25,4 g Dimethylolpropionsäure, 232,7 g eines Polyesters aus Adipinsäure und 1,6-Haxandiol (OHZ- 47 mg KOH/g), 22,5 g Pluronic^{®} PE 4300 und 52,2 g 1,6 Hexandiol in 129,5 g Aceton zugesetzt. Durch externe Kühlung der Reaktionsmischung wurde die Temperatur zunächst bei ca. 56°C gehalten. Nach dem Abklingen der Exothermie wurde bei 60°C bis zum Erreichen eines NCO-Gehalts von 2,2 Gew.-% (theo. NCO-Gehalt 2,4 %) gerührt. Dann wurden 2,7 g Simulsol^{®} P 23 zugegeben und vollständig in die Reaktionsmischung eingerührt. 500 g des auf 25°C abgekühlten Prepolymers wurden unter kräftigem Rühren einer bei 15°C vorgelegten Lösung aus 821 g Wasser, 18,1 g Triethylamin und 2,2 g Hydazinhydrat (64 %-ige Lösung) zugeführt. Die entstandene Dispersion wurde anschließend für 20 Minuten bei 40°C nachgerührt, bevor das Aceton destillativ aus der Dispersion entfernt wurde. Eine Filtration der auf Raumtemperatur abgekühlten Dispersion erfolgte durch einen Schnellfilter (1000 µm).

### Kenndaten der Polyurethan-Dispersion:

| | |
|---|---|
| Mittlere Teilchengröße: (Laserkorrelationsspektroskopie, LKS) | 286 nm |
| pH (20°C): | 8,8 |
| Festgehalt: | 36 % |

### PUR-Dispersion 4

Eine Mischung aus 57,9 g Toluylen-2,4-diisocyanat, 83,1 g 2,2'-Diisocyanatodiphenylmethan und 83,1 g 2,4'-DÜsocyanatodiphenylmethan wurde innerhalb von 2 Minuten einer Mischung aus 32,7 g Dimethylolpropionsäure, 144,0 g Terathane^{®} 2000 und 57,4 g 1,6 Hexandiol in 157,6 g Aceton zugesetzt. Durch externe Kühlung der Reaktionsmischung wurde die Temperatur zunächst bei ca. 56°C gehalten. Nach dem Abklingen der Exothermie wurde bei 60°C bis zum Erreichen eines NCO-Gehalts von 2,4 Gew.-% (theo. NCO-Gehalt 2,7 Gew.-%) gerührt. Dann wurden 14,6 g Hydroxyethylmethacrylat sowie 47 mg 2,6-Di-tert.-butyl-4-methylphenol zugegeben und bei gleicher Temperatur bis zu einem NCO Gehalt von 1,7 Gew.- % (theo. NCO-Gehalt 1,9 Gew.-%) gerührt. 500 g des auf 25°C abgekühlten Prepolymers wurden unter kräftigem Rühren einer bei 15°C vorgelegten Lösung aus 1048 g Wasser und 19,6 g Triethylamin zugeführt. Die entstandene Dispersion wurde anschließend für 20 Minuten bei 40°C nachgerührt, bevor das Aceton destillativ aus der Dispersion entfernt wurde. Eine Filtration der auf Raumtemperatur abgekühlten Dispersion erfolgte durch einen Schnellfilter (240 µm).

### Kenndaten der Polyurethan-Dispersion:

| | |
|---|---|
| Mittlere Teilchengröße: (Laserkorrelationsspektroskopie, LKS) | 78 nm |
| pH (20°C): | 8,2 |
| Festgehalt: | 27 % |

### Vergleichsbeispiel PUR-Dispersion 5

Eine Mischung aus 108,4 g Toluylen-2,4-diisocyanat und 155,8 g 4,4'-Diisocyanatodiphenylmethan wurde innerhalb von 2 Minuten einer Mischung aus 33,9 g Dimethylolpropionsäure, 310,3 g eines Polyesters aus Adipinsäure und 1,6-Haxandiol (OHZ: 47 mg KOH/g) und 69,6 g 1,6 Hexandiol in 173 g Aceton zugesetzt. Durch externe Kühlung der Reaktionsmischung wurde die Temperatur zunächst bei ca. 56°C gehalten. Nach dem Abklingen der Exothermie wurde bei 60°C bis zum Erreichen des theoretischen NCO-Gehalts (2,4 %) gerührt. Dann wurde 3,5 g Simulsol^{®} P 23 zugegeben und vollständig in die Reaktionsmischung eingerührt. 800 g des auf 25°C abgekühlten Prepolymers wurde unter kräftigem Rühren einer bei 15°C vorgelegten Lösung aus 1314 g Wasser, 28,9 g Triethylamin und 3,5 g Hydazinhydrat (64 %-ige Lösung) zugeführt. Die entstandene Dispersion wurde anschließend für 20 Minuten bei 40°C nachgerührt. Während der Nachrührzeit sedimentierte die Dispersion.

### Vergleichsbeispiel PUR-Dispersion 6

Eine Mischung aus 108,4 g Toluylen-2,4-düsocyanat und 77,9 g 4,4' -Diisocyanatodiphenylmethan und 77,9 g 2,4'-Diisocyanatodiphenylmethan wurde innerhalb von 2 Minuten einer Mischung aus 33,9 g Dimethylolpropionsäure, 310,3 g eines Polyesters aus Adipinsäure und 1,6-Haxandiol (OHZ- 47 mg KOH/g) und 69,6 g 1,6 Hexandiol in 173 g Aceton zugesetzt. Durch externe Kühlung der Reaktionsmischung wurde die Temperatur zunächst bei ca. 56°C gehalten. Nach dem Abklingen der Exothermie wurde bei 60°C bis zum Erreichen des theoretischen NCO-Gehalts (2,4 %) gerührt. Dann wurde 3,5 g Simulsol^{®} P 23 zugegeben und vollständig in die Reaktionsmischung eingerührt. 800 g des auf 25°C abgekühlten Prepolymers wurde unter kräftigem Rühren einer bei 15°C vorgelegten Lösung aus 1314 g Wasser, 28,9 g Triethylamin und 3,5 g Hydazinhydrat (64 %-ige Lösung) zugeführt. Die entstandene Dispersion wurde anschließend für 20 Minuten bei 40°C nachgerührt, bevor dann das Aceton destillativ aus der Dispersion entfernt wurde. Nach dem die Dispersion auf Raumtemperatur abgekühlt wurde, wurde sie durch ein Schnellfilter (240 µm) filtriert.

Die Dispersion wies nach 1 Woche Lagerung bei 20°C einen Bodensatz auf.

### Kenndaten der Polyurethan-Dispersion:

| | |
|---|---|
| Mittlere Teilchengröße: (Laserkorrelationsspektroskopie, LKS) | 301 nm |
| pH (20°C): | 8,8 |
| Festgehalt: | 34 % |

### Anwendungstechnische Beispiele

**Filmherstellung:** 100 g der jeweiligen Dispersion wurden mit 10 g einer 1:1 Mischung aus Wasser und Butylglykol intensiv vermischt und 12 h bei RT gelagert. Anschließend wurden mit einem Rakel (210 µm Nassfilmschichtdicke) Filme auf einer Glasplatte hergestellt. Die Optik der erhaltenen Filme wurde beurteilt.

**Tabelle 2:**

| | **Bsp. 1** | **Bsp. 2** | **Bsp.3** | **Bsp.4** | **Vergleich Bsp. 6** |
|---|---|---|---|---|---|
| Filmtransparenz | klar | klar | klar | klar | trübe |
| Filmoberfläche | glatt | glatt | glatt | glatt | rau |
| Pendelhärte n. 7d | 77" | 72" | 75" | 105" | 72" |

## Patentansprüche

1. Wässrige Polyurethan (PUR)-Dispersionen, enthaltend ein Gemisch A) zweier oder mehrerer Polyisocyanate An+1) als Aufbaukomponenten, von denen ein Polyisocyanat A1) Diphenlymethan-2,2'-diisocyanat ist, mit der Maßgabe, dass in diesem Gemisch 25 bis 80 Gew.-% Diphenlymethan-2,2'-düsocyanat A1) vorhanden ist

2. Wässerige Polyurethan (PUR)-Dispersionen gemäß Anspruch 1, **dadurch gekennzeichnet, dass** neben der Aufbaukomponente A) das Polyurethan als weitere Aufbaukomponenten:
B) ein oder mehrere Polyol/-e mit zahlenmittleren Molgewichten von 500 bis 6000 g/mol,
C) ein oder mehrere isocyanatreaktive, ionisch oder potentiell ionische Verbindung/- en sowie
D) eine oder mehreren niedermolekulare Verbindung/-en des Molgewichts 62 bis 499 g/mol, die in Summe über zwei oder mehr Hydroxyd- und/oder Aminogruppen enthält.

3. Wassrige Polyurethan(PUR)-Dispersionen gemäß Anspruch 2, **dadurch gekennzeichnet, dass** diese hydrophile Emulgatoren F) als Aufbaukomponente enthatten.

4. Verfahren zur Herstellung der wässrigen Polyurethan(PUR)-Dispersionen gemäß Anspruch 2, **dadurch gekennzeichnet, dass** die Komponenten B), C) sowie D) getrennt und in beliebiger Reihenfolge oder als Mischung mit den vorgelegten Komponenten A1) und An+1) zu einem isocyanatfunktionellen Prepolymeren umgesetzt werden, anschließend das mit Neutralisationsamin versetzte Wasser zum Prepolymer oder das Prepolymer zu der wässrigen Vorlage gegeben und das Prepolymer in die wässriger Phase überführt wird.

5. Physikaliseb trocknende Beschichtungsmittel, enthaltend Polyurethan(PUR)-Dispersionen gemäß Anspruch 1.

6. Wässrige Zweikomponenten(2K)-Beschichtungsmittel enthaltend enthaltend Polyurethan(PUR)-Dispersionen gemäß Anspruch 1 und einen Vernetzer.

7. Verwendung der Polyurethan(PUR)-Dispersionen gemäß Anspruch zur Herstellung von Klarlacken, pigmentierten oder nicht pigmentierten Beschichtungen.

## Claims

1. Aqueous polyurethane (PU) dispersions comprising a mixture A) of two or more polyisocyanates An+1) as synthesis components, of which one polyisocyanate A1) is diphenylmethane 2,2'-diisocyanate, with the proviso that in this mixture there is 25% to 80% by weight of diphenylmethane 2,2'-diisocyanate A1).

2. Aqueous polyurethane (PU) dispersions according to Claim 1, **characterized in that** as well as the synthesis component A) the polyurethane comprises as further synthesis components:
B) one or more polyols having number-average molar weights of 500 to 6000 g/mol,
C) one or more isocyanate-reactive, ionically or potentially ionic compounds, and
D) one or more low molecular weight compounds of molar weight 62 to 499 g/mol, which in total two or more hydroxyl and/or amino groups.

3. Aqueous polyurethane (PU) dispersions according to Claim 2, **characterized in that** they comprise hydrophilic emulsifiers F) as synthesis component.

4. Process for preparing the aqueous polyurethane (PU) dispersions according to Claim 2, **characterized in that** components B), C) and D) are reacted separately and in any order or as a mixture with the initial-charge components A1) and An+1) to give an isocyanate-functional prepolymer, after which the water, with neutralizing amine added, is added to the prepolymer, or the prepolymer is added to the aqueous initial charge, and the prepolymer is transferred to the aqueous phase.

5. Physically drying coating compositions comprising polyurethane (PU) dispersions according to Claim 1.

6. Aqueous two-component (2K) coating compositions comprising polyurethane (PU) dispersions according to Claim 1 and a crosslinker.

7. Use of the polyurethane (PU) dispersions according to Claim 1 for producing clearcoats, pigmented or non-pigmented coatings.

## Revendications

1. Dispersions aqueuses de polyuréthane (PUR), contenant un mélange A) de deux ou plus de deux polyisocyanates An+1) en tant que composants constitutifs, dont un polyisocyanate A1) est le diphénylméthane-2,2'-diisocyanate, étant entendu que dans ce mélange sont présents 25 à 80 % en poids de diphénylméthane-2,2'-diisocyanate A1).

2. Dispersions aqueuses de polyuréthane (PUR) selon la revendication 1, **caractérisées en ce qu'**en plus du composant constitutif A) le polyuréthane contient comme autres composants constitutifs :
B) un ou plusieurs polyol(s) ayant des masses moléculaires moyennes en nombre de 500 à 6000 g/mole,
C) un ou plusieurs composé(s) ionique(s) ou potentiellement ionique(s), réactifs avec des isocyanates, ainsi que
D) un ou plusieurs composé(s) de faible masse moléculaire, ayant une masse moléculaire de 62 à 499 g/mole, qui contient/contiennent au total plus de deux groupes hydroxy et/ou amino.

3. Dispersions aqueuses de polyuréthane (PUR) selon la revendication 2, **caractérisées en ce qu'**elles contiennent en tant que composant constitutif des émulsifiants F) hydrophiles.

4. Procédé pour la préparation de dispersions aqueuses de polyuréthane (PUR) selon la revendication 2, **caractérisé en ce qu'**on fait réagir les composants B), C) ainsi que D), séparément et en un ordre quelconque ou sous forme de mélange, avec les composants A1) et An+1) disposés au préalable, pour obtenir un prépolymère à fonction isocyanate, ensuite on ajoute au prépolymère de l'eau additionnée d'amine de neutralisation on le prépolymère à la solution aqueuse disposée au préalable et le prépolymère est transféré dans la phase aqueuse.

5. Compositions de revêtement à séchage physique, contenant des dispersions de polyuréthane (PUR) selon la revendication 1.

6. Compositions aqueuse de revêtement bicomposant (2K) contenant des dispersions de polyuréthane (PUR) selon la revendication 1 et un agent de réticulation.

7. Utilisation des dispersions de polyuréthane (PUR) selon la revendication 1 pour la production de vernis, de revêtements pigmentés ou non pigmentés.
